# EUROPEAN PATENT SPECIFICATION

(11) **EP 0 375 020 B1**
(45) Date of publication and mention of the grant of the patent: **25.10.1995**
(21) Application number: 89203136.0
(22) Date of filing: 11.12.1989
(51) Int. Cl.: H02H 9/04, H02H 7/125

(54) **A transient protection circuit**
Schutzschaltung gegen zeitweilig wirkende Effekte
Circuit de protection contre des effets transitoires

(30) Priority: 15.12.1988 GB 8829276
(43) Date of publication of application: 27.06.1990
(73) Proprietor: Philips Electronics N.V., 5621 BA Eindhoven (NL)
(72) Inventor: Schoofs, Franciscus Adrianus Cornelis Maria, NL-5656 AA Eindhoven (NL)
(74) Representative: Evers, Johannes Hubertus Maria

(56) References cited:
- DE-A- 3 209 186
- GB-A- 2 021 326
- US-A- 3 173 029
- US-A- 4 758 920

## Description

This invention relates to a circuit arrangement provided with a pair of d.c. supply lines, wherein one of the d.c. supply lines is fed via a resistive element , said resistive element being comprised in a transient protection circuit further comprising a voltage responsive element which conducts during the occurrence of a transient voltage and a means for absorbing transient current.

Such a circuit arrangement is known from DE-A-3 209 186. In case of a transient the voltage responsive element becomes conductive and conduct a transient current that is absorbed by the means for absorbing transient current. In that way circuit arrangement is protected to a large extent against the destructive action of the transients. A disadvantage of the known circuit arrangement is that the transient protection circuit requires the use of additional components and therefore makes the circuit arrangement more complicated and expensive.

The invention aims to provide a circuit wherein the transient protection circuit is realized with a relatively small amount of components.

According to the invention this object is achieved in a circuit arrangement of the kind mentioned in the opening paragraph in that the circuit arrangement comprises a switch mode power converter including in one of the d.c. supply lines a series arrangement of an inductor followed by a diode feeding a capacitance coupled with the other supply line and switch means for repetitively coupling a point in the supply line between the inductor and the diode with the other supply line, in that the voltage responsive element is arranged to bypass the inductor and the diode, and in that said capacitance fed by the series arrangement also forms the means for absorbing transient current.

Since the capacitance fed by the series arrangement of an inductor and a diode is part of both the switch mode power converter and the transient protection circuit, relatively little components need to be used in the circuit arrangement. An additional advantage of the configuration of a circuit arrangement according to the invention is that in case of a transient the inductor does not saturate.

The voltage responsive element may comprise a diode which is rendered conductive during the occurrence of a transient. The use of a diode enables a fast response time of the protection circuit.

A switching transistor may be coupled in series with the d.c. supply line prior to the inductor so as to be biased to turn off within a predetermined time interval from the occurrence of a transient voltage. Furthermore a voltage clamp can be provided after the resistive element.

The circuit arrangement may further comprise a rectifier circuit having a pair of output lines connected one to each of the d.c. supply lines and a pair of input lines for connection to an a.c. supply source, one of which input or output lines includes the resistive element. A voltage clamp can be provided across the output terminals of the rectifier circuit.

The invention also encompasses a fluorescent lamp unit characterised in the combination of a fluorescent tube and a circuit arrangement according to the invention. These are preferably integrated in a housing which is equipped with a connector portion that permits removable electrical coupling with a socket for an incandescent light bulb. Alternatively, the circuit arrangement may be provided in a socket or luminaire for receiving a removable lamp.

In order that the invention and its various other preferred features may be understood more easily some embodiments thereof will now be described, by way of example only, with reference to the drawings in which:
Figure 1 is a schematic diagram of a switch mode power converter incorporating a transient protection circuit connected in accordance with the invention,
Figure 2 is a refinement of the circuit of Figure 1,
Figure 3 is a partial block diagram showing a fluorescent lamp unit incorporating the circuit of Figure 2 and
Figure 4 is a side view of fluorescent lamp unit which incorporates a transient protection circuit.

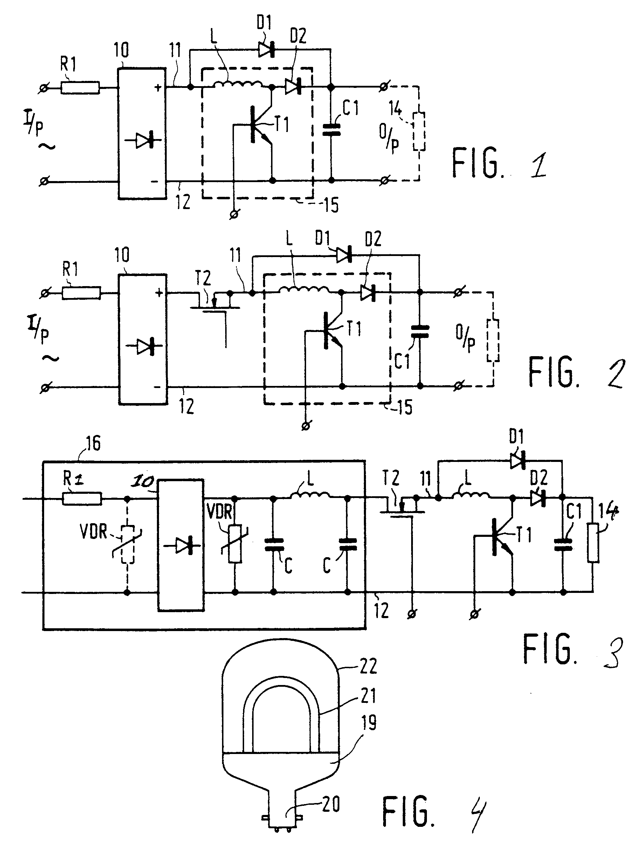

Referring to Figure 1 the circuit incorporates a circuit to be protected which is constituted by a switch mode power converter for providing a stepped up voltage. The converter includes an inductor L connected in series with a diode D2 in the positive voltage supply line 11 from the output of the rectifier 10. The junction of the inductor L and the diode D2 is connected to the collector electrode of an NPN switching transistor T1, the emitter electrode of which is connected to the negative supply line 12. The base electrode of the transistor is connected to a cyclical switching voltage source (not shown) which causes repetitive switching on and off to induce a step up voltage greater than mains voltage in a known manner. The stepped up voltage is fed via output O/P to a load 14 for example a d.c. to a.c. power converter and a fluorescent tube.

In Figure 1 the diode D1 is arranged to bridge the series arrangement of the inductor L and diode D2 to the capacitor C1 which was already present and which constitutes the means for absorbing transient energy of the transient protection circuit. When a transient occurs on the mains the transient voltage across the inductor L is limited due to diversion of transient current to the capacitor and voltage drop across resistor R1 and the inductor is not saturated.

Figure 2 incorporates a further refinement into the circuit of Figure 1. In this circuit, the source-drain path of an insulated gate field effect transistor (IGFET) T2 is connected in the supply line 11. The gate electrode of the transistor is connected to a suitable bias (not shown) and the transistor is arranged to be turned off in response to a transient.

The circuit of Figure 3 shows a complete circuit, based on Figure 2, forming a fluorescent lamp drive circuit such as may be employed for compact integrated lamp units to replace incandescent bulbs in commercial and domestic premises.

Across the mains input there is connected a voltage clamp and rectifier circuit 16. The voltage clamp is formed by a series arrangement of a resistor R1 and a voltage dependent resistor VDR. The resistor VDR may be connected in parallel with the output of the rectifier circuit 10 as shown in solid lines, or alternatively may be connected in parallel with the input of the rectifier circuit 10 as shown by dotted lines. This depends upon the relative prices of suitable protection components and the integration process. A partly smoothed voltage is developed across the resistor VDR and this voltage feeds the rectifier and filter circuit the output of which is connected to the supply lines 11 and 12 and ultimately powers a load 14, containing a fluorescent tube, via the voltage step up circuit. In this arrangement all voltages, except for the drain voltage of T2, are limited relative to the voltage occurring across the VDR clamp. The delay introduced by the clamp 16 and by T2, D1 & C1 permits a longer delay between occurrence of a transient and turn off of the transistor 12.

The operating conditions for the voltage clamp can be improved when this clamp is arranged behind the rectifier bridge (less degradation), which enables for example the voltage requirements imposed on the IC to be less stringent. This arrangement is also intended to fall within the scope of this invention. However, a drawback to this arrangement is that the rectifier bridge must now be capable of handling the transient current.

It should be appreciated that in applications such as cheap and small electronic ballasts the available storage capacity is small for example smaller than 10 micro-Farads and tens of milli-Henries for a saturating current Isat of less than one Ampere. The time necessary for turning off the series transistor T2 is dependent upon the value of the capacitor C1 required for sustaining the power supply around the zero crossing of the main sine wave. The voltage output of the series transistor T2 increases only slowly, because the inductor L is effectively by-passed by the diode D1, so that enough time is available to turn off the series transistor T2 before the voltage can reach an excessive value. Accordingly dissipation in the series transistor is limited.

Figure 4 shows the side view of a fluorescent lamp unit comprising a base 19 having a bayonet connector 20 for removable connection of the lamp in a socket such as is employed for incandescent bulbs. The base unit contains the circuitry such as described in relation to Figures 1 to 4 and a fluorescent tube 21 forming a load for the circuit which tube is contained within a housing 22.

## Claims

1. A circuit arrangement provided with a pair of d.c. supply lines (11,12), wherein one of the d.c. supply lines is fed via a resistive element (R1), said resistive element (R1) being comprised in a transient protection circuit further comprising a voltage responsive element (D1) which conducts during the occurrence of a transient voltage and a means (C1) for absorbing transient current, characterised in that the circuit arrangement comprises a switch mode power converter including in one (11) of the d.c. supply lines a series arrangement of an inductor (L) followed by a diode (D2) feeding a capacitance (C1) coupled with the other supply line (12) and switch means (T1) for repetitively coupling a point in the supply line (11) between the inductor (L) and the diode (D2) with the other supply line (12), in that the voltage responsive element (D1) is arranged to bypass the inductor (L) and the diode (D2), and in that said capacitance (C1) fed by the series arrangement also forms the means for absorbing transient current.

2. A circuit arrangement as in claim 1, wherein the voltage responsive element (D1) comprises a diode.

3. A circuit arrangement as claimed in claim 1 or 2, wherein a switching transistor (T2) is coupled in series in the DC supply line (11) prior to the inductor (L) and is biased to turn off within a predetermined time interval from the occurrence of a transient voltage.

4. A circuit arrangement as claimed in claim 1 or 2, further comprising a rectifier circuit (10) having a pair of output lines connected one to each of the d.c supply lines (11,12) and a pair of input lines for connection to an a.c. supply source, one of which input or output lines includes the resistive element (R1).

5. A circuit arrangement as claimed in claim 3, wherein a voltage clamp (VDR) is provided after the resistive element (R1).

6. A circuit arrangement as claimed in claim 4, wherein a voltage clamp (VDR) is provided across the output terminals of the rectifier circuit (10).

7. A fluorescent lamp unit, characterised in the combination of a fluorescent tube (21) and a circuit arrangement as claimed in any one of the claims 1 to 6.

8. A fluorescent lamp unit as claimed in claim 7, characterised in that the circuit arrangement and the tube (21) are integrated in a housing (22) which is equipped with a connector portion (20) that permits removable electrical coupling with a socket for an incandescent light bulb.

9. A fluorescent lamp unit as claimed in claim 7, characterised in that the circuit arrangement is provided in a lamp socket or luminaire which is adapted to receive a removable fluorescent tube.

## Patentansprüche

1. Schaltungsanordnung mit einem Paar Gleichstrom-Speiseleitungen (11, 12), wobei eine der Gleichstrom-Speiseleitungen über ein Widerstandselement (R1) gespeist wird, wobei dieses Widerstandselement (R1) in einer Schutzschaltung gegen zeitweilig wirkende Effekte vorgesehen ist, die weiterhin ein spannungsabhängiges Element (D1), das beim Auftritt einer Übergangsspannung leitend ist, und ein Mittel (C1) zum Aufnehmen von Übergangsstrom aufweist, dadurch gekennzeichnet, daß diese Schaltungsanordnung einen geschalteten Speisewandler aufweist, daß in einer (11) der Gleichstromspeiseleitungen eine Reihenschaltung aus einem Induktor (L) mit einer nachfolgenden Diode (D2) vorgesehen ist, die eine Kapazität (C1) speist, die mit der anderen Speiseleitung (12) gekoppelt ist, und Schaltmittel (T1) zur wiederholten Koppeln eine Punktes in der Speiseleitung (11) zwischen dem Induktor (L) und der Diode (D2) mit der anderen Speiseleitung (12), daß das spannungsabhängige Element (D1) dazu vorgesehen ist, den Induktor (L) und die Diode (D2) zu umgehen und wobei die genannte, durch die Reihenschaltung gespeiste Kapazität (C1) ebenfalls das Mittel zum Aufnehmen des Übergangsstromes bildet.

2. Schaltungsanordnung nach Anspruch 1, wobei das spannungsabhängige Element (D1) eine Diode aufweist.

3. Schaltungsanordnung nach Anspruch 1 oder 2, wobei ein Schalttransistor (T2) in Reihe in der Gleichstromspeiseleitung (11) vor dem Induktor (L) vorgesehen und vorgespannt ist um innerhalb eines vorbestimmten Zeitintervalls vom Auftritt einer Übergangsspannung abzuschalten.

4. Schaltungsanordnung nach Anspruch 1 oder 2, weiterhin mit einer Gleichrichterschaltung (10) mit einem Paar Ausgangsleitungen, die mit je einer der Speiseleitungen (11, 12) verbunden sind und einem Paar Eingangsleitungen zum Verbinden einer Gleichstromspeisequelle, wobei eine der genannten Ausgangs- oder Eingangsleitungen das Widerstandselement (R1) aufweist.

5. Schaltungsanordnung nach Anspruch 3, wobei eine Spannungsklemmschaltung (VDR) hinter dem Widerstandselement (R1) vorgesehen ist.

6. Schaltungsanordnung nach Anspruch 4, wobei eine Spannungsklemmschaltung (VDR) an den Ausgangsklemmen der Gleichrichterschaltung (10) vorgesehen ist.

7. Leuchtstofflampeneinheit, gekennzeichnet durch die Kombination einer Leuchtstoffröhre (21) und eine Schaltungsanordnung nach einem der Ansprüche 1 bis 6.

8. Leuchtstofflampe nach Anspruch 7, dadurch gekennzeichnet, daß die Schaltungsanordnung und die Röhre (21) in einem Gehäuse (22) integriert sind, das mit einem Verbindungsteil (20) versehen ist, wodurch eine entfernbare elektrische Kopplung mit einer Fassung für einen Leuchtstoffkolben möglich ist.

9. Leuchtstofflampeneinheit nach Anspruch 7, dadurch gekennzeichnet, daß die Schaltungsanordnung mit einer Lampenfassung oder einer Leuchte versehen ist, die eine entfernbare Leuchtstoffröhre enthalten kann.

## Revendications

1. Circuit de commutation muni d'une paire de lignes d'alimentation de courant continu (11, 12), dans lequel l'une des lignes d'alimentation de courant continu est alimentée par l'intermédiaire d'un élément de résistance (R1), ledit élément de résistance (R1) incorporé dans un circuit de protection contre des effets transitoires comportant en outre un élément sensible à la tension (D1) qui est conducteur pendant la présence d'une tension transitoire, et des moyens (C1) pour absorber un courant transitoire, caractérisé en ce que le circuit de commutation comporte une alimentation à découpage présentant dans l'une (11) des lignes d'alimentation de courant continu un montage série constitué d'un inducteur (L) et d'une diode (D2) alimentant un condensateur (C1) couplé à l'autre ligne d'alimentation (12), et des moyens commutateurs (T1) conçus pour coupler répétitivement à l'autre ligne d'alimentation (12) un point situé dans la ligne d'alimentation (11) et s'étendant entre l'inducteur (L) et la diode (D2), en ce que l'élément sensible à la tension (D1) est disposé de façon à shunter l'inducteur (L) et la diode (D2), et en ce que ledit condensateur (C1) alimenté par le montage série constitue également les moyens pour absorber un courant transitoire.

2. Circuit de commutation selon la revendication 1, dans lequel l'élément sensible à la tension (D1) comporte une diode.

3. Circuit de commutation selon la revendication 1 ou 2, dans lequel un transistor de commutation (T2) est couplé en série à la ligne d'alimentation de courant continu (11) en amont du conducteur (L) et qu'il est polarisé pour être mis hors d'état de conduction dans un intervalle de temps prédéterminé dès la présence d'une tension transitoire.

4. Circuit de commutation selon la revendication 1 ou 2, comportant en outre un circuit redresseur (10) présentant une paire de lignes de sortie reliées aux lignes d'alimentation de courant continu (11, 12) et une paire de lignes d'entrée pour être reliées à une source d'alimentation de courant alternatif, l'une des lignes d'entrée ou de sortie renfermant l'élément de résistance (R1).

5. Circuit de commutation selon la revendication 3, dans lequel un limiteur de tension (VDR) est disposé en aval de l'élément de résistance (R1).

6. Circuit de commutation selon la revendication 4, dans lequel un limiteur de tension (VDR) est disposé sur les bornes de sortie du circuit redresseur (10).

7. Unité de lampe fluorescente, caractérisée dans la combinaison d'un tube fluorescent (21) et d'un circuit de commutation selon l'une quelconque des revendications 1 à 6.

8. Unité de lampe fluorescente selon la revendication 7, caractérisée en ce que le circuit de commutation et le tube (21) sont intégrés dans un boîtier (22) muni d'une partie de connexion (20) permettant un couplage électrique amovible comportant une douille pour une lampe à incandescence.

9. Unité de lampe fluorescente selon la revendication (7), caractérisée en ce que le circuit de commutation est prévu dans une douille de lampe ou dans un appareil d'éclairage adapté à recevoir un tube fluorescent amovible.
